# EUROPEAN PATENT SPECIFICATION

(11) **EP 3 733 631 B1**
(45) Date of publication and mention of the grant of the patent: **07.08.2024**
(21) Application number: 18895424.2
(22) Date of filing: 10.12.2018
(51) Int. Cl.: C04B 35/66, F27D 1/00, F27D 1/16, C04B 35/043

(54) **SPRAYING MATERIAL FOR HOT REPAIR**
SPRÜHMATERIAL FÜR HEISSREPARATUR
MATÉRIAU DE PULVÉRISATION POUR RÉPARATION À CHAUD

(30) Priority: 28.12.2017 JP 2017253586
(43) Date of publication of application: 04.11.2020
(73) Proprietor: Krosakiharima Corporation, Kitakyushu-shi, Fukuoka 806-8586 (JP)
(72) Inventor: HONDA, Kazuhiro, Kitakyushu-shi, Fukuoka 806-8586 (JP); SHIRAMA, Norikazu, Kitakyushu-shi, Fukuoka 806-8586 (JP); AKAI, Satoshi, Kitakyushu-shi, Fukuoka 806-8586 (JP); NAKAMICHI, Tsubasa, Kitakyushu-shi, Fukuoka 806-8586 (JP); OONO, Yousuke, Kitakyushu-shi, Fukuoka 806-8586 (JP)
(74) Representative: Vossius & Partner Patentanwälte Rechtsanwälte mbB
(86) International application number: PCT/JP2018/045271
(87) International publication number: WO 2019/131082

(56) References cited:
- JP-A- 2004 161 529
- JP-A- 2006 160 558
- JP-A- 2015 196 177
- JP-A- H04 170 370
- JP-A- H04 280 877
- JP-A- H09 132 468
- No further relevant documents disclosed

## Description

### TECHNICAL FIELD

The present invention relates to a hot-repairing spraying material for use in hot repair of a lining of, e.g., a converter, a degassing vessel, a ladle or other kiln/furnace, wherein the spraying material is used such that it is sprayed onto a to-be-repaired surface together with water.

As used in this specification, the term "hot repair" means a repair in a state in which the temperature of a to-be-repaired surface is approximately 600°C or more.

### BACKGROUND ART

For example, in a converter, it has been practiced to repair a worn part of a lining under a hot condition. As a method for such hot-repair, there has been known a method which comprises spraying a spraying material comprising a refractory raw material and a binder, onto a worn part of a lining together with water.

Conventionally, as the spraying material for use in this method, a type using phosphate or silicate as a binder has been often used. However, this type of spraying material has a disadvantage of poor durability, because phosphate or silicate can react with slag to form a low-melting-point compound.

Therefore, in recent years, with a view to giving slag penetration resistance and strength to a sprayed deposit, a substance capable of forming a carbon bond under a hot condition, specifically a carbonaceous resin such as a phenolic resin, has been used in place of phosphate or silicate (see, for example, the following Patent Document 1).

### CITATION LIST

### [Parent Document]

Patent Document 1: JP 2010-235340A

### SUMMARY OF INVENTION

### [Technical Problem]

In a spraying material described in the Patent Document 1, in order to suppress a delay in softening of the carbonaceous resin a part of the carbonaceous resin is added in a state in which it is mixed with a to-be-granulated power to form granules (agglomerated particles). However, due to formation of granules, heat is less likely to be transmitted to the carbonaceous resin. As a result, a delay in softening of the carbonaceous resin is inevitable, which leads to a problem that the spraying material rebounds when it reaches a to-be-repaired surface, resulting in poor adherability with respect to the to-be-repaired surface.

A technical problem to be solved by the present invention is to provide a hot-repairing spraying material having improved adherability with respect to a to-be-repaired surface.

### [Solution to Technical Problem]

The present inventors considered that using a phenolic resin as a carbonaceous resin is effective in improving adherability with respect to a to-be-repaired surface (hereinafter referred to simply as "adherability"). Because the phenolic resin is more likely to be aggregated immediately after it is sprayed onto the to-be-repaired surface, thereby exhibiting appropriate viscosity (adherability). Further, from a viewpoint of improving durability such as slag penetration resistance, the present inventors selected a magnesian raw material as a refractory raw material. Further, in order to solve the above technical problem, the present inventors conducted researches with a focus on a composition ratio between the magnesian raw material and the phenolic resin, particularly a composition ratio between them in an ultrafine particle size range. As a result, the present inventors have conceived of the present invention.

Specifically, according to one aspect of the present invention, there is provided a hot-repairing spraying material containing 65 to 95 mass% of a magnesian raw material, and 0.5 to 10 mass% of a phenolic resin, wherein a content of a fraction of the magnesian raw material having a particle size of less than 20 µm is 5 to 30 mass%, and a content of a fraction of the phenolic resin having a particle size of less than 20 µm is 0.3 to 9 mass%, and wherein "the content of the fraction of the magnesian raw material having a particle size of less than 20 µm / the content of the fraction of the phenolic resin having a particle size of less than 20 µm" is 0.6 to 30.

### [Effect of Invention]

In the present invention, a composition ratio of the magnesian raw material to the phenolic resin in an extremely highly active ultrafine particle size range of less than 20 µm falls within a specific range to allow the magnesian raw material and the phenolic resin to exist in a well-balanced manner in the ultrafine particle size range, so that, immediately after spraying the spraying material onto a to-be-repaired surface, a matrix having appropriate viscosity (adherability) is formed, and further a carbon bond is uniformly formed in the matrix. This provides improved adherability.

### DESCRIPTION OF EMBODIMENTS

The hot-repairing spraying material of the present invention contains 65 to 95 mass% of a magnesian raw material, and 0.5 to 10 mass% of a phenolic resin.

If the content of the magnesian raw material is less than 65 mass%, durability such as corrosion resistance (slag penetration resistance) is deteriorated. On the other hand, if the content of the magnesian raw material is greater than 95 mass%, the content of the phenolic resin is relatively reduced, leading to deterioration in adherability.

Further, if the content of the phenolic resin is less than 0.5 mass%, the effect of forming a carbon bond becomes weak, leading to deterioration in adherability. On the other hand, if the content of the phenolic resin is greater than 10 mass%, the microstructure of a sprayed deposit is porosified due to large volatilization from the phenolic resin, leading to deterioration in sprayed deposit strength.

As mentioned above, in the present invention, the composition ratio of the magnesian raw material to the phenolic resin in an ultrafine particle size range of less than 20 µm is limited to a specific range. Specifically, the content of the fraction of the magnesian raw material having a particle size of less than 20 µm is 5 to 30 mass%, and the content of the fraction of the phenolic resin having a particle size of less than 20 µm is 0.3 to 9 mass%, wherein "the content of the fraction of the magnesian raw material having a particle size of less than 20 µm / the content of the fraction of the phenolic resin having a particle size of less than 20 µm" (this content ratio will hereinafter be referred to simply as "the content ratio") is 0.6 to 30. The reason for limiting the composition ratio such as the content ratio in the above manner is as follows.

If the content of the fraction of the magnesian raw material having a particle size of less than 20 µm is less than 5 mass%, an aggregating effect (adherability keeping function based on aggregation) of the ultrafine fraction of the magnesian raw material becomes weak, leading to deterioration in adherability. On the other hand, if the content of the fraction of the magnesian raw material having a particle size of less than 20 µm is greater than 30 mass%, the aggregating effect becomes excessive, and thereby the viscosity of the spraying material becomes excessively high, leading to deterioration in dischargeability during spraying, resulting in deteriorated adherability.

If the content of the fraction of the phenolic resin having a particle size of less than 20 µm is less than 0.3 mass%, a reaction for forming a carbon bond undesirably becomes slow, leading to deterioration in adherability. On the other hand, the content of the fraction of the phenolic resin having a particle size of less than 20 µm is greater than 9 mass%, a part of ultrafine phenolic resin particles freely flies along with dust generation during spraying, leading to deterioration in adherability. There is another problem that combustion of the flying ultrafine phenolic resin particles causes difficulty in viewing a sprayed area.

If the content ratio is less than 0.6 (the content of the fraction of the phenolic resin having a particle size of less than 20 µm is comparatively excessively large), a volatilization rate of the fraction of the phenolic resin is excessively increased, so that a sprayed deposit is quickly contracted, and separated from an adherence interface (to-be-repaired surface), leading to deterioration in adherability. Then, along with the deterioration in adherability, peel-off of the sprayed deposit occurs due to the sprayed deposit's weight and a spraying pressure. On the other hand, if the content ratio is greater than 30 (the content of the fraction of the phenolic resin having a particle size of less than 20 µm is comparatively excessively small), strength of a sprayed deposit (sprayed deposit strength) cannot be maintained, leading to peel-off of the sprayed deposit. A desirable range of the content ratio is 0.6 to 20.

As the magnesian raw material and the phenolic resin for use in the present invention, it is possible to any magnesian raw material and phenolic resin which are commonly used (commercially available) as raw materials for a hot-repairing spraying material. Then, a particle size composition of each of the magnesian raw material and the phenolic resin may be adjusted such that the contents of the fractions of the magnesian raw material and the phenolic resin each having a particle size of less than 20 µm, and the content ratio, fall within the above given ranges, respectively. Here, in the hot-repairing spraying material of the present invention, a part of the magnesian raw material can become aggregate. Thus, the particle size composition of the magnesian raw material may be adjusted, e.g., such that the content of a fraction of the magnesian raw material having a particle size of less than 20 µm in a particle size range of less than 4 mm, and the content ratio fall, within the above given ranges, respectively.

As used in this specification, the term "magnesian raw material" means a magnesian raw material in which the content of MgO is 60 mass% or more, wherein it includes a natural magnesian raw material, and wastes of magnesia bricks or magnesia-carbon bricks.

Further, as used in this specification, the term "particle size" means a sieve mesh size. For example, a particle having a particle size of less than 20 µm means a particle which can pass through a sieve having a mesh size of 20 µm

In addition to the magnesian raw material and the phenolic resin, the hot-repairing spraying material of the present invention may contain 0.5 to 10 mass% of pitch. By containing 0.5 to 10 mass% of pitch, it is possible to improve sprayed deposit strength to provide improved durability.

Further, in addition to the magnesian raw material, the phenolic resin and pitch, the hot-repairing spraying material of the present invention may appropriately contain: a refractory raw material such as a dolomite raw material or a carbon raw material; a metal powder; an organic fiber; and the like, which are commonly used as raw materials for a hot-repairing spraying material.

The hot-repairing spraying material of the present invention is sprayed onto a to-be-repaired surface together with water, in the same manner as that in a conventional hot-repairing spraying material. Further, a spraying method and spraying conditions such as an addition amount of the water may be the same as those in conventional techniques.

### [EXAMPLES]

Table 1 shows a raw material composition and an evaluation result of each of Inventive Examples and Comparative Examples. Evaluation items and an evaluation method for Inventive Examples and Comparative Examples are as follows. In Table 1, "Others" means a dolomite raw marital, a carbon raw material and a metal powder.

### < Adherability >

A spraying material in each Inventive and Comparative Examples was sprayed onto a vertical surface (to-be-repaired surface) of a magnesia-carbon brick heated up to about 1000°C, using a commonly-used dry-type spraying machine, to form a sprayed deposit. An addition amount water was set in the range of 20 to 40 mass% with respect to and in addition to 100 mass% of the spraying material.

Adherability was evaluated by a mass ratio of a deposit sprayed onto a to-be-repaired surface to the spraying material used. Specifically, a sample having a mass ratio of 80 mass% or more was evaluated as o (Good), and a sample having a mass ratio of 60 to less than 80 mass% was evaluated as Δ (Allowable). Further, a sample having a mass ratio of less than 60 mass% was evaluated as × (NG).

### < Corrosion Resistance >

A sample cut from the sprayed deposit in each Example to have a given size was subjected to corrosion at a temperature of 1650 to 1700°C for 5 hours in a rotary corrosion tester using billets and converter slag having C/S =3.4, as a corrosive agent. A maximum wear amount in the sample was measure, and the reciprocal thereof was calculated. Then, on the assumption that the reciprocal in Inventive Example 1 is 100, the reciprocal in each of the remaining Examples was converted to a relative value. Thus, a larger relative value means better corrosion resistance. In the evaluation of corrosion resistance, a sample having a relative value of 80 or more was evaluated as ∘ (Good), and a sample having a relative value of 70 to less than 80 was evaluated as Δ (Allowable). Further, a sample having a relative value of less than 70 was evaluated as × (NG).

### < Sprayed Deposit Strength >

A sample cut from the sprayed deposit in each Example to have a given size was subjected to measurement of compressive strength at normal temperatures in accordance with JIS R2575, and, on the assumption that the measured compressive strength in Inventive Example 1 is 100, the measured compressive strength in each of the remaining Examples was converted to a relative value. Thus, a larger relative value means higher sprayed deposit strength. In the evaluation of sprayed deposit strength, a sample having a relative value of 80 or more was evaluated as o (Good), and a sample having a relative value of 70 to less than 80 was evaluated as Δ (Allowable). Further, a sample having a relative value of less than 70 was evaluated as × (NG).

### < Dischargeability >

A distal end of a nozzle of the dry-type spraying machine was visually observed during spraying. As a result, a sample discharged without pulsation was evaluated as ∘ (Good), and a sample discharged with pulsation was evaluated as× (NG).

### < Comprehensive Evaluation >

A sample in which the evaluations in all the evaluation items were o was comprehensively evaluated as ∘ (Good), and a sample in which the evaluations in one to three of the evaluation items were Δ and the evaluations in the remaining evaluation items were ∘ was comprehensively evaluated as Δ (Allowable). Further, a sample in which the evaluation in one of the evaluation items was × was comprehensively evaluated as × (NG).

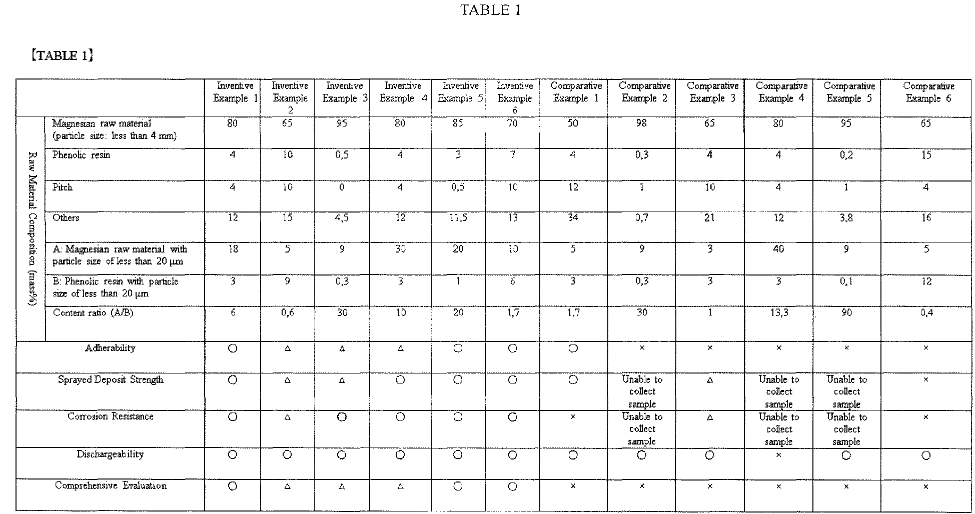

As shown in Table 1, in Inventive Examples 1 to 6 each falling within the scope of the present invention defined in the appended claims, the evaluation of adherability was ∘ (Good) or Δ (Allowable), i.e., was satisfactory, and the comprehensible evaluation was also satisfactory.

Comparative Example 1 is an example in which the content of the magnesian raw material is excessively small. Due to the insufficiency of the magnesian raw material contributing to improvement in corrosion resistance (slag penetration resistance), the Comparative Example 1 failed to obtain sufficient corrosion resistance.

Comparative Example 2 is an example in which the content of the magnesian raw material is excessively large. Thus, the content of the phenolic resin becomes excessively small, and thereby adherability was deteriorated to cause difficulty in sufficiently obtaining a sprayed deposit. As a result, it was unable to collect a sample for evaluating corrosion resistance and sprayed deposit strength.

Comparative Example 3 is an example in which the content of the fraction of the magnesian raw material having a particle size of less than 20 µm is excessively small. Thus, the aggregating effect based on the fraction of the magnesian raw material having a particle size of less than 20 µm became weak, and thereby adherability was deteriorated.

Comparative Example 4 is an example in which the content of the fraction of the magnesian raw material having a particle size of less than 20 µm is excessively large. Thus, the aggregating effect became excessive to cause deterioration in dischargeability during spraying, so that adherability was deteriorated to cause difficulty in sufficiently obtaining a sprayed deposit. As a result, it was unable to collect a sample for evaluating corrosion resistance and sprayed deposit strength.

Comparative Example 5 is an example in which the content of the phenolic resin is excessively small, and the content ratio is excessively high (the content of the fraction of the phenolic resin having a particle size of less than 20 µm is excessively small). The content of the phenolic resin contributing to improvement in adherability is excessively small, so that adherability was deteriorated to cause difficulty in sufficiently obtaining a sprayed deposit. As a result, it was unable to collect a sample for evaluating corrosion resistance and sprayed deposit strength.

Comparative Example 6 is an example in which the content of the phenolic resin is excessively large, and the content ratio is excessively small (the content of the fraction of the phenolic resin having a particle size of less than 20 µm is excessively large). Thus, the volatilization rate of the phenolic resin becomes excessively fast, and a part of the fraction of the phenolic resin having a particle size of less than 20 µm freely flew along with dust generation during spraying, so that adherability was deteriorated.

## Claims

1. A hot-repairing spraying material containing 65 to 95 mass% of a magnesian raw material, and 0.5 to 10 mass% of a phenolic resin, wherein the magnesian raw material is a magnesian raw material in which a content of MgO is 60 mass% or more, wherein a content of a fraction of the magnesian raw material having a particle size of less than 20 µm is 5 to 30 mass%, and a content of a fraction of the phenolic resin having a particle size of less than 20 µm is 0.3 to 9 mass%, and wherein "the content of the fraction of the magnesian raw material having a particle size of less than 20 µm / the content of the fraction of the phenolic resin having a particle size of less than 20 µm" is 0.6 to 30, and wherein a particle having a particle size of less than 20 µm means a particle which can pass through a sieve having a mesh size of 20 µm.

2. The hot-repairing spraying material as claimed in claim 1, which contains 0.5 to 10 mass% of pitch.

3. The hot-repairing spraying material as claimed in claim 1 or 2, wherein "the content of the fraction of the magnesian raw material having a particle size of less than 20 µm / the content of the fraction of the phenolic resin having a particle size of less than 20 µm" is 0.6 to 20.

## Patentansprüche

1. Ein Sprühmaterial für Heißreparatur, enthaltend 65 bis 95 Massen-% eines magnesiumhaltigen Ausgangsmaterials und 0,5 bis 10 Massen-% eines Phenolharzes, wobei das magnesiumhaltige Ausgangsmaterial ein magnesiumhaltiges Ausgangsmaterial ist, in dem ein Gehalt an MgO 60 Massen-% oder mehr beträgt, wobei ein Gehalt einer Fraktion des magnesiumhaltigen Ausgangsmaterials mit einer Teilchengröße von weniger als 20 µm 5 bis 30 Massen-% beträgt und ein Gehalt einer Fraktion des Phenolharzes mit einer Teilchengröße von weniger als 20 µm 0,3 bis 9 Massen-% beträgt und wobei "der Gehalt der Fraktion des magnesiumhaltigen Ausgangsmaterials mit einer Teilchengröße von weniger als 20 µm / der Gehalt der Fraktion des Phenolharzes mit einer Teilchengröße von weniger als 20 µm" 0,6 bis 30 beträgt und wobei ein Teilchen mit einer Teilchengröße von weniger als 20 µm ein Teilchen bedeutet, das durch ein Sieb mit einer Maschengröße von 20 µm hindurchgehen kann.

2. Das Sprühmaterial für Heißreparatur nach Anspruch 1, welches 0,5 bis 10 Massen-% Pech enthält.

3. Das Sprühmaterial für Heißreparatur nach Anspruch 1 oder 2, wobei "der Gehalt der Fraktion des magnesiumhaltigen Ausgangsmaterials mit einer Teilchengröße von weniger als 20 µm / der Gehalt der Fraktion des Phenolharzes mit einer Teilchengröße von weniger als 20 µm" 0,6 bis 20 beträgt.

## Revendications

1. Matière de pulvérisation pour réparation à chaud contenant 65 à 95 % en masse d'une matière première magnésienne, et 0,5 à 10 % en masse d'une résine phénolique, dans laquelle la matière première magnésienne est une matière première magnésienne dans laquelle une teneur en MgO est de 60 % en masse ou plus,
dans laquelle une teneur en une fraction de la matière première magnésienne ayant une taille de particule inférieure à 20 µm est de 5 à 30 % en masse, et une teneur en une fraction de la résine phénolique ayant une taille de particule inférieure à 20 µm est de 0,3 à 9 % en masse, et dans laquelle « la teneur en la fraction de matière première magnésienne ayant une taille de particule inférieure à 20 µm / la teneur en la fraction de la résine phénolique ayant une taille de particule inférieure à 20 µm » est de 0,6 à 30, et dans laquelle une particule ayant une taille de particule inférieure à 20 µm désigne une particule qui peut passer à travers un tamis ayant une taille de maille de 20 µm.

2. Matière de pulvérisation pour réparation à chaud selon la revendication 1, qui contient 0,5 à 10 % en masse de poix.

3. Matière de pulvérisation pour réparation à chaud selon la revendication 1 ou 2, dans laquelle « la teneur en la fraction de la matière première magnésienne ayant une taille de particule inférieure à 20 µm / la teneur de la fraction de la résine phénolique ayant une taille de particule inférieure à 20 µm » est de 0,6 à 20.
